# EUROPEAN PATENT SPECIFICATION

(11) **EP 3 018 925 B1**
(45) Date of publication and mention of the grant of the patent: **04.07.2018**
(21) Application number: 14306769.2
(22) Date of filing: 05.11.2014
(51) Int. Cl.: H04W 84/12, H04W 12/04, H04W 12/06

(54) **Method and apparatus for secure wireless sharing**
Verfahren und Vorrichtung zum sicheren drahtlosen Teilen
Procédé et appareil de partage sans fil sécurisé

(43) Date of publication of application: 11.05.2016
(73) Proprietor: Thomson Licensing, 92130 Issy-les-Moulineaux (FR)
(72) Inventor: Eluard, Marc, 35576 Cesson-Sévigné (FR); Heen, Olivier, 35576 Cesson-Sévigné (FR); Maetz, Yves, 35576 Cesson-Sévigné (FR)
(74) Representative: Vidon Brevets & Stratégie

(56) References cited:
- EP-A1- 2 675 130
- AVM GmbH: "FRITZ!Box 7490 Installation and Operation", , 1 September 2014 (2014-09-01), XP055170112, http://en.avm.de Retrieved from the Internet: URL:http://en.avm.de/fileadmin/user_upload /EN/Manuals/FRITZ_Box/FRITZ_Box_7490-en.pd f [retrieved on 2015-02-17]
- AVM GmbH: "FRITZ!WLAN USB Stick Installation and Operation", http://en.avm.de, 1 February 2013 (2013-02-01), XP055170053, Retrieved from the Internet: URL:http://en.avm.de/fileadmin/user_upload /EN/Manuals/FRITZ_WLAN/Manual_FRITZWLAN_US B_Stick.pdf [retrieved on 2015-02-16]

## Description

### FIELD

The present invention relates to the setup and use of wireless networks, specifically the setup and use of a secure one-time network in a WLAN.

### BACKGROUND

Several methods for joining a wireless network already exist. The basic method is the direct sharing of the WiFi key. This method has drawbacks: it is complicated and error prone. Moreover it reveals the WiFi key. Having those drawbacks in mind, the WiFi alliance promoted WiFi Protected Setup (WPS). This is a set of four methods that ease the process of entering a WiFi network. In the WPS Personal Identification Number (PIN) method, the user types-in only a short PIN. This method is known to be vulnerable and still requires an input device such as a keyboard, gamepad, etc. In the WPS Push Button Configuration (PBC) method, the user presses two buttons, one on the entering device and one on the access point (AP). This method takes time because of a two minute temporization time period. If this temporization is not implemented, the method is known to be vulnerable. Also, an unintended device could join the network if it is in range. The two other methods are Near Field Communications (NFC) and Universal Serial Bus (USB). They both use a device (a NFC device and a USB device respectively) in order to record the WiFi parameters and distribute it to the entering device. Note that in both cases, the WiFi key is disclosed.

Other methods exist and are related to the general field of "device pairing". Such methods allow the establishment of a Diffie-Hellmann encryption key. The main drawback with such methods is the risk of a man-in-the-middle attack, and the need for a communication channel prior to the WiFi access such as a USB wire, a LAN wire, a 3G connection, etc. Many existing methods disclose the long term network key. Many existing methods take time or need device modification or are error prone. Some existing methods are inherently vulnerable. Also, it is noted that it is impossible to connect a device which does not have the correct hardware such as a WiFi adapter. A similar existing device is the FRITZ! WLAN USB Stick, which is a Wi-Fi USB adapter by AVM GmbH. It is configured by the access point with the Wi-Fi connection information in order to provide a "plug and play" connection setup.

The security and execution problems in the management and integration of new equipment in a WiFi network are also well known. To connect to desired wireless network, the user must typically find the network name or service set identifier (SSID) and type in the wireless network key as provided by the network owner. This procedure may sound simple but for the average user, it is not trivial and may take some time. This problem is even more damaging in the case of a temporary connection. Indeed, the pairing may take more time than using the connection and the user gets the wireless network key. The exposure of the wireless key presents a security risk. Other procedures such as WPS still reveal the wireless network key to the user.

Those techniques lead to revealing the network key to external or non-regular users of the network. In order to ensure the security and privacy of the network, a safe behavior would include the network owner changing his/her network key after the non-regular users finish their access to avoid any further leakage. However this operation is tedious given the multiplicity and diversity of devices such as computers, smartphones, game console, tablets, etc. As a result, most network owners users will not change their network key until after there is a security breach.

Furthermore, revealing the network key can reveal some hints on the user's strategy regarding password creation. If the network key is "network 123!", it is plausible that the other accounts of the network owner are similar and "facebookl23!" might be a good guess for his/her Facebook password. Finally, some devices have some limitations in the security protocols that they support. As a result, the network owner might be obliged to lower the overall security of his/her network in order to accept the temporary (non-regular user) device. For instance, an old non-regular user device supporting only WPA cannot enter a more recent WPA2 network. To gain access, the network may have to lower the network security to provide temporary access to the non-regular user device. The above disadvantages should be overcome and an easier and more secure method is needed to access a wireless network.

### SUMMARY

This summary is provided to introduce a selection of concepts in a simplified form as a prelude to the more detailed description that is presented later. The summary is not intended to identify key or essential features of the invention, nor is it intended to delineate the scope of the claimed subject matter.

In one aspect of the invention, a method for securely generating and using a one-time wireless network includes receiving an instruction at an access point for generation of the one-time network. A wireless adapter, connected to the access point, is configured by the access point for use by a remote device. The wireless adapter is removed from the access point and installed on the remote device. The wireless adaptor is initialized on the remote device and is used to access the one-time network. Access to the one-time network allows the remote device to access the resources of the access point. Interactions of the remote device using the one-time network may be viewed using the remote device. An advantage of using a network adapter on a one-time network includes providing access to the remote device of the resources of the one-time network without exposing a network key of the created one-time network.

In another aspect of the invention, an apparatus for generating a one-time network to provide access for a remote device to the resources of the apparatus includes an input/output interface for receiving a request for generation of the one-time network and a processor, connected to memory that functions to configure a wireless network adapter connected to the apparatus. A one-time network interface is used to communicate with the wireless network adapter when the wireless network adapter is connected to the remote device. The processor acts to activate the one-time network after configuring the wireless network adapter. The scheme allows a network adapter to be configured by the apparatus and used by remote device without exposing a network key.

Additional features and advantages of the invention will be made apparent from the following detailed description of illustrative embodiments which proceeds with reference to the accompanying figures. It should be understood that the drawings are for purposes of illustrating the concepts of the disclosure and is not necessarily the only possible configuration for illustrating the disclosure.

### BRIEF DESCRIPTION OF THE DRAWINGS

The foregoing summary of the invention, as well as the following detailed description of illustrative embodiments, is better understood when read in conjunction with the accompanying drawings, which are included by way of example, and not by way of limitation with regard to the claimed invention. In the drawings, like numbers represent similar elements.

Figure 1 illustrates an example environment in which the current invention may be practiced;
Figure 2 depicts an example setup of a wireless adapter according to aspects of the invention;
Figure 3 depicts an example use of a secure one-time network adapter according to aspects of the invention;
Figure 4 depicts an example method according to aspects of the invention;
Figure 5 illustrates an example network adapter apparatus; and
Figure 6 illustrates an example gateway according to aspects of the invention.

### DETAILED DISCUSSION OF THE EMBODIMENTS

In the following description of various illustrative embodiments, reference is made to the accompanying drawings, which form a part thereof, and in which is shown, by way of illustration, how various embodiments in the invention may be practiced. It is to be understood that other embodiments may be utilized and structural and functional modification may be made without departing from the scope of the present invention.

The inventors have devised a method herein that allows automatic and dynamic creation and management of a wireless network in which it is possible to integrate any device without the need for specific knowledge, such as the knowledge of a wireless network key. In one embodiment, the wireless network owner has an access point (AP) or equivalent device to control the wireless network. Alternatives for the AP are a gateway, asymmetric digital subscriber line (ADSL) box, wireless router, set top box, and the like. In addition to the AP, the network owner has a wireless interface adapter, such as a custom or common plug-in wireless adapter stick having a universal serial bus (USB, standard, mini, or micro) or other interface standards (physical or wireless). One wireless standard, IEEE 802.11 is a widely used example of a wireless protocol standard. Networks compatible with this standard are known as WiFi networks and devices which can provide access to such a wireless standard can be referred to as WiFi adapters. Herein, the use of the term WiFi is meant to include a specific example of a wireless protocol. However, the aspects of the invention apply to not just WiFi, but apply to any wireless network using any wireless protocol such as Wimax or ZigBee to provide wireless access between an AP and a remote device. Thus, a WiFi network is a specific example of a wireless network and a WiFi adapter is a specific example of a wireless adapter.

In one embodiment, to temporarily authorize a new device on a network of the AP, the owner connects the WiFi adapter on the AP and presses a dedicated button. During this action, the box creates an ephemeral wireless network having its own wireless network key, different from the existing wireless network key. The ephemeral network may also be termed a one-time network (OTN). The AP then configures the wireless adapter with all the needed information (SSID, ephemeral wireless network key, timestamp, network interface name, etc.), and creates the corresponding wireless ephemeral or OTN. OTN parameters such as the security protocol to be used (WPA2, WPA, WEP, etc.) may be determined automatically by the AP or by the owner. In the case of automatic choice, the security protocol chosen is the most secure protocol known by both the AP and the WiFi adapter.

Once this automatic configuration is completed, the user plugs the WiFi adapter on the device to connect (e.g. a laptop, TV set, tablet, and the like) in order to authorize access to network resources, such as the Internet or other services. Note that the operating system of the device may ask the user which network interface he wants to use (e. g. choose the network interface by selecting the name created during initialization).

Note that this novel approach to WiFi access is different from the previously known WiFi Protected Setup (WPS) methods. In particular this is different from the fourth WiFi setup method that uses an USB memory stick to store some credential. In the current novel approach, the device not only stores the network configuration but also provides the network access. No network key is exposed for the main WLAN; the programmed WiFi adapter utilizes a key for a temporary, ephemeral network that is different than the main WLAN network.

In addition to the classic or main WiFi network that the owner has configured, the AP is able to create and manage ephemeral wireless networks called "one-time network" (OTN). These OTNs are created at the request of a user in order to integrate temporarily, securely, and automatically a device in the network of the owner. To do this, the user can use a standard WiFi adapter or a custom WiFi adapter according to the invention. The WiFi adapter is automatically configured by the box upon user action of requesting an OTN and selecting an OTN name.

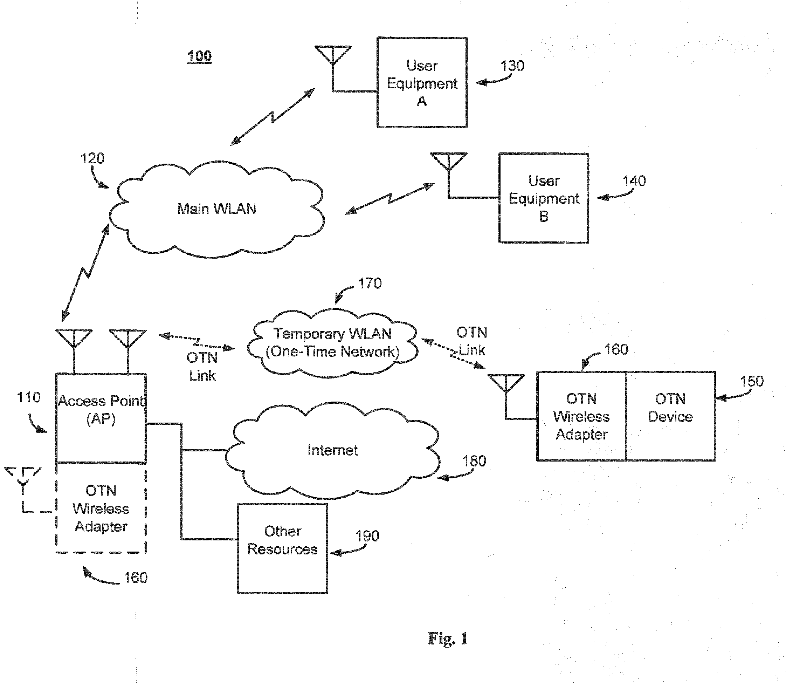

Figure 1 illustrates a system 100 which serves as an example environment for the present invention. An AP 110 has the capability to control multiple WLANs. The main WLAN 120 serves regular users via channels for regular user equipment A 130 and regular user equipment B 140. User equipment A and B have regular access to the main WLAN 120 channels. User Equipment A and B can access the Internet 180 or other resources 190, such as specialized servers, memory resources, access to other networks, and the like, via the AP 110 by being authorized users of main WLAN 120. Users requesting new access to the AP 110 may have access to the AP resources via an ephemeral, temporary, or OTN 170 according to aspects of the invention. This OTN 170 is separate and isolated from the main WLAN 120 and can be created using a specific wireless channel created by the AP 110 in order to accommodate a user having a new device 150. According to aspects of the invention, the new device 150 accesses to the AP 110 resources via the newly created OTN 170 via a WiFi adapter specifically configured by the AP 110. Access to the OTN 170 can thus be granted without divulging critical network parameters, such as a network key, to the user of device 150.

Advantages of the configuration include network security and ease of access to AP resources for a user having a device 150. One advantage is providing a network separation between the main WLAN 120 network of regular users and the OTN network 170 that provides access to the AP 110 to the new device 150. Another advantage is that there is no need to provide any WiFi network key to the user of new device 150. Another advantage is that the configuration and management are automatic for the user of new device 150. This results in a user friendly & fool proof experience for the user of new device 150. Another advantage is that the created OTN can be invisible. That is, by hiding the service set identifier (SSID) of the newly created OTN 170, the AP is less likely to be a target of a security attack. Thus, a device 150 can use the OTN without having knowledge of the network name (SSID). Another advantage is that the system can use a high security protocol that is hidden from the user of new device 150. The user of new device 150 need not deal with entry of a long key, such as a 128 bit key, and the AP 110 does not need to support these incompatible protocols of the new device 150. Also, the AP 110 can impress restrictions on the OTN 170 use such as total access time, number of simultaneous connections, and the like. Another advantage is that the current configuration allows connecting a new device 150 that has no wireless interface. This feature results since the wireless interface is provided on the WiFi adapter 160 that connects to the new device 150. The new device 150 need only have an interface that is compatible with the standard or custom WiFi adapter 160, such as a USB or other serial interface, or a parallel interface, or even a wireless interface.

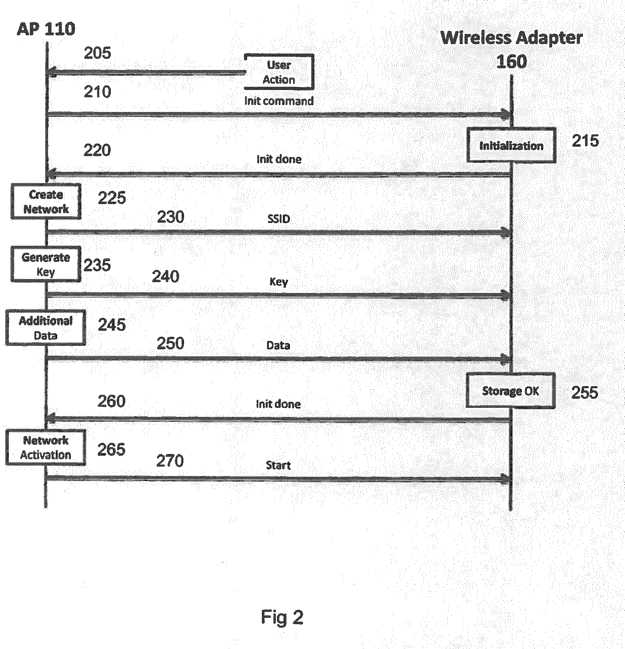

Figure 2 depicts a signaling or activity diagram 200 between the AP 110 and the WiFi adapter 160 when the WiFi adapter 160 is connected to the AP 110 in the configuration stage for the WiFi adapter. This connection in most instances is a physical connection where the WiFi Adapter 160 is plugged into the AP 110. However, other types of connections are possible such as a wireless or network connection from the AP to the wireless adapter 160. Hereinafter, a physical connection is assumed between the AP 110 and the WiFi Adapter 160. This assumption is shown in Figure 1 as dashed lines of the WiFi Adapter 160 attached to the AP 110. Initially, a user is interested in obtaining access to a wireless network, such as a WLAN, to use resources such as the Internet, servers of the WLAN, and the like. But, the wireless network owner does not want to expose credentials such as a wireless key, to a user. The present invention allows a user access without disclosing the wireless key to the user.

In event 205 of Figure 2, the user or wireless owner takes action to request an OTN. At this stage, the action may be the selection of a SSID. Alternately, an OTN SSID may be generated at random by the AP. The user action 205 that triggers the configuration of the WiFi adapter can be one of the following: Pressing a button on the WiFi adapter, or pressing a physical button on the AP 110, or pressing a button from the user interface of the AP 110, or plugging the WiFi adapter onto the AP 110, without the need for any button. The button may be placed either on the AP or on the WiFi adapter. In the instance where a button on the AP is pressed, the system can use a standard WiFi adapter. Here, the pressing of any button is detected by a processor running software in the AP to detect button activation on an input/output interface. In the latter case, where there is a button on the WiFi adapter, the adapter is a new or custom device. Here, the pressing of any button is detected by a processor running software in the adapter to detect button activation on an input/output interface. In both cases, the AP 110 software is specific to provide this new feature. Here, the pressing of any button is detected by a processor in the AP.

As a result of the request action 205, and initiation command 210 is generated by the AP 110 and sent to the WiFi Adapter 160 that is connected to the AP. An initiation process 215 is then performed in the WiFi adapter. At the conclusion of the initiation process, an initialization done message 220 is sent from the WiFi adapter to the AP.

At action 225, the OTN is created by the AP 110. This may involve selection of a channel (frequency of operation) for the OTN. Message 230 sets up the SSID for the adapter 160. A key for the new network is generated at action 235. The key may be generated in either encrypted form or in the clear. The key is sent to the WiFi adapter 160 in message 240. Additional data action 245 may be generated in the AP and may include information as operations restrictions, such as time to install, time duration of access, resource access restrictions, and the like. The data message 250 is sent to the WiFi adapter 160. The configuration load and storage data checks may be performed at action 255 in the WiFi Adapter 160. An initialization complete message 260 is then sent to the AP 110 from the WiFi Adapter 160.

Once configured, the WiFi adapter 160 can then be removed or disconnected from the AP and plugged into any device (150) or connected to any device (150) able to manage it. Action 265 performed by the AP 110 activates the OTN 170. This action may be performed after the WiFi adapter 160 is removed from the AP after WiFi Adapter configuration is complete. An optional start message 270 may then be sent to the WiFi Adapter 160 after insertion into the device 150. This can allow WiFi Adapter 160 to operate on a device 150.

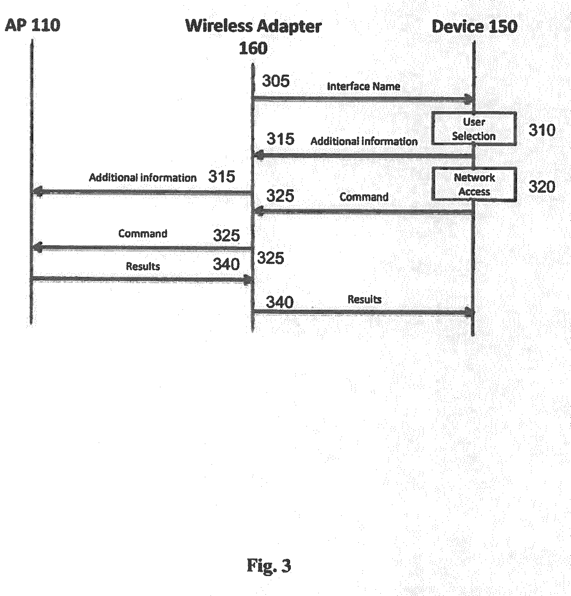

Figure 3 depicts a signaling or activity diagram between the AP 110, the WiFi Adapter 160, and the device 150 after the WiFi adapter 160 has been installed on the device 150. If the WiFi Adapter 160 is the only network interface present on the device 150, then it will be used by default. The interface name is sent from the WiFi adapter 160 to the device 150 in message 305. However, in many instances, there is a main wireless network 120 that the AP 110 manages. However, the configured adapter 160 uses a different ephemeral or temporary OTN 170, created by the AP 110, to provide access to network resources (180, 190) of the AP 110. Thus, if there are multiple networks managed by the AP 110, the user may have to select the correct network interface by name after the configured WiFi adapter is inserted into a connector of the new device. This name (SSID) may be the name selected by the user or network owner at action 205. This name selection is represented by action 310. Optionally, the SSID of the OTN may have been selected at random. The AP 110 may have previously chosen a name that makes this selection easier such as "OTN003", "Ephemera1001", or the like.

Once the configured WiFi adapter 160 locates or is given a network name to which to attach, the adapter can collect some information about the new device, such as MAC address and the like. This information is sent from the device 150 to the WiFi adapter 160 and delivered to the AP 100 in message 315. AP 110 may later use this information for filtering or rights management. Typically, the MAC address may be used for MAC address based filtering at the AP level.

Then, the user of the new device 150 may access, action 320, the OTN 170 using the WiFi adapter 160 without further configuration. As an example, figure 3 message 325 represents an action, such as a network resource (180, 190) request command 325 that is propagated from the device 150, through adapter 160 and to the AP 110 using the OTN 170. The AP 110 responds with results from the command 325 and returns results 340 which are transmitted from the AP 110, through OTN 170 to the WiFi adapter 160 and to the user device 150. The network owner does not need to modify anything in his network configuration or share any credential with the user of device 150.

It is notable that these operations can be performed with almost any network adapter. For example, the above technique may be used to configure and manage the well-known ZigBee™ adapter to give ephemeral access on a home automation network for a new device. Even if the device does not have the correct hardware. For example, a smartphone, acting as an AP, may be able to access a WiFi network but unable to access a ZigBee™ network without the current invention. However, use of the above invention allows access to the ZigBee™ network.

Variations on the embodiments of the present invention are possible by addressing flexibility features of the invention. For example, an initialization button may be present or not, physical or not. In one embodiment, an initialization button may be present on the WiFi adapter 160. In this embodiment, the adapter is initialized when this button is pressed and only if it is plugged in a compatible AP. It is possible for the adapter to create all data and request for a particular configuration to the AP. In another embodiment, no button is present on the WiFi adapter 160 and the adapter is reinitialized as soon as it is plugged onto the AP. In one embodiment, the WiFi adapter may be configured to only allow access only if used soon after initialization. For example, a user may have only 5 minutes to plug the WiFi adapter 160 into the device 150. If this time is exceeded, the OTN temporarily created will be canceled. In another embodiment, only a limited time for access to the OTN is available.

In another embodiment, the AP can apply a limited time session for the WiFi adapter. For example, the user has only 1 hour of internet after the activation by the device. In addition, resource specific access can be administered. The device 150 may be granted internet 180 access, but be denied access to other resources 190. In another embodiment, an automatic reset is possible. For security reasons, it is possible to force a reset of the configured WiFi adapter 160 when it is removed from a device 150 and places into another device. This is accomplished by programing the adapter to adversely modify (delete or change) at least one network parameter after the adapter detects a different device than the original device. This can prevent re-use of the configured adapter by a device having a different MAC address than that originally authorized. Thus, upon first connection to a different device after removal from the authorized device 150, the adapter is disabled or reset.

In another embodiment, to limit the visibility of the OTN and potential attacks, it is possible to set up the OTN as an invisible network with unpredictable SSID. Here, the SSID is not transmitted or published by the OTN so that no other device knows that the OTN network exists. In this embodiment, the OTN may be used by the device via the wireless adapter without exposing the network name (SSID). In another embodiment, multiple adapters can be configured for the same OTN or multiple OTNs may be used. For example, it is possible to configure multiple WiFi adapters to access the same OTN, or on the contrary, to ensure that each adapter is on its own OTN. In another embodiment, authentication procedures may be added to the configuration of the WiFi adapter. For security proposes, it is possible to add authentication procedures between AP and WiFi adapter. These authentication procedures can be performed for the initialization and during use. For example, authentication may be used with a configured adapter along with the utilization of a secure authenticated channel.

In another embodiment, it is possible to use different connector types such as USB, mini-USB, micro-USB, or wireless connection such as Bluetooth or NFC, and the like to allow OTN access to a wide variety of devices having differing interface standards. Thus, it is clear that customization is possible. For example, it is possible for the network owner to configure precisely the list of devices, or protocols that will be granted by the WiFi adapter. For example, he/she might desire to prevent the use of file sharing protocols. He/she might limit to internet access and no access to local devices such as a network-attached-storage that hosts private files. Conversely, the network owner may grant access to an internal device of the network resources, such as a Network Access Server (NAS). The above options, alternative embodiments, aspects, and features may be mixed and matched according to the needs and desires of the network owner.

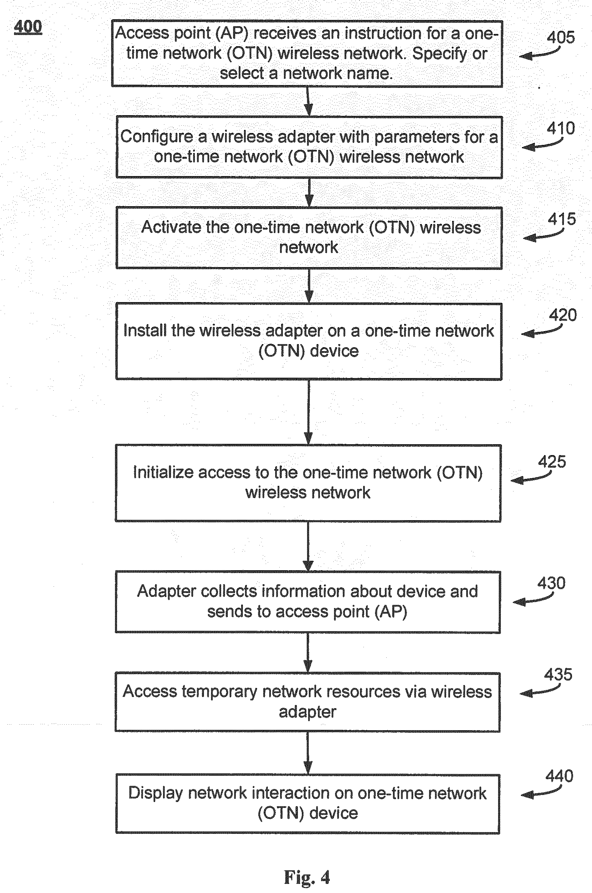

Figure 4 depicts an example method 400 according aspects of the invention. At step 405, the AP receives a request or instruction for a temporary wireless network (OTN). This request may be an explicit request entered by a user or a network manager or owner or may be an action such as the insertion or connection of a wireless adapter into input/output connection interface of the AP. As part of the request, a name of an OTN may be entered by a user, manager, or owner or selected by the AP. A combination may also be performed. For example, the wireless network adapter can be inserted into the AP and interpreted as a request for the generation of an OTN. Afterwards, an SSID can be selected via a user interface.

The OTN is also known as a temporary network because its duration may be limited in time or scope. At step 410, the wireless adapter is configured with the parameters of an OTN. These parameters, written to the network adapter, may include, but are not limited to a channel for operation of the OTN, a network name (SSID), an OTN network key, and operational restrictions, such as time to connect the WiFi adapter, duration of access, resource access restrictions, and the like.

At step 415, the OTN is activated. This step may follow the removal of the configured WiFi adapter from the AP. Alternately, the OTN may already exist and the additionally configured WiFi adapter may be added to the list of adapters that are authorized to access the OTN. Step 420 includes the action of installing the wireless adapter on a new device of the OTN. Here, the WiFi adapter is physically moved from a connector on the AP to a connector on the new device that requires access to the OTN. In most instances step 420 involves a physical attachment of the WiFi adapter to the new device to be added to the OTN.

Step 425 includes initializing a data connection between the configured WiFi adapter and the new device. This data connection involves the selection, if necessary, of the OTN network name (SSID) so that the WiFi adapter can establish a data connection between the AP and the new device using the OTN. If the SSID transmission is suppressed for security, then step 425 includes connecting to the OTN generated by the AP 110. Once connected, the WiFi adapter at step 430 collects information about the new device, such as MAC address and the like, and sends that information to the AP. The new device is then able to access network resources at step 435, such as data transfers (commands and responses) between the new device and the AP via the OTN using the WiFi adapter. At this point, some or all of the transactions, including requests and responses between the new device and the AP can be viewed on the display of the new device at step 440. Thus the new device can display data obtained from the network resources of the AP using an OTN. In gaining such access to the network resources of the AP, the new device accessed the AP via a temporary OTN created by the AP. The connection between the AP and the new device made possible by a WiFi adapter configured by the AP and installed on the new device where the connection is via an OTN. The operation of the method of Figure 4 has the advantage of providing access to a new device without exposing sensitive information regarding a network of the AP. For example, for an AP having a main wireless network, such as 120 of Figure 1, no sensitive wireless main network information, such as a network key, is disclosed to a user. Independently of the existence of a main wireless network, access to the OTN still does not expose any sensitive wireless network information of the OTN, such as a network key, or an SSID.

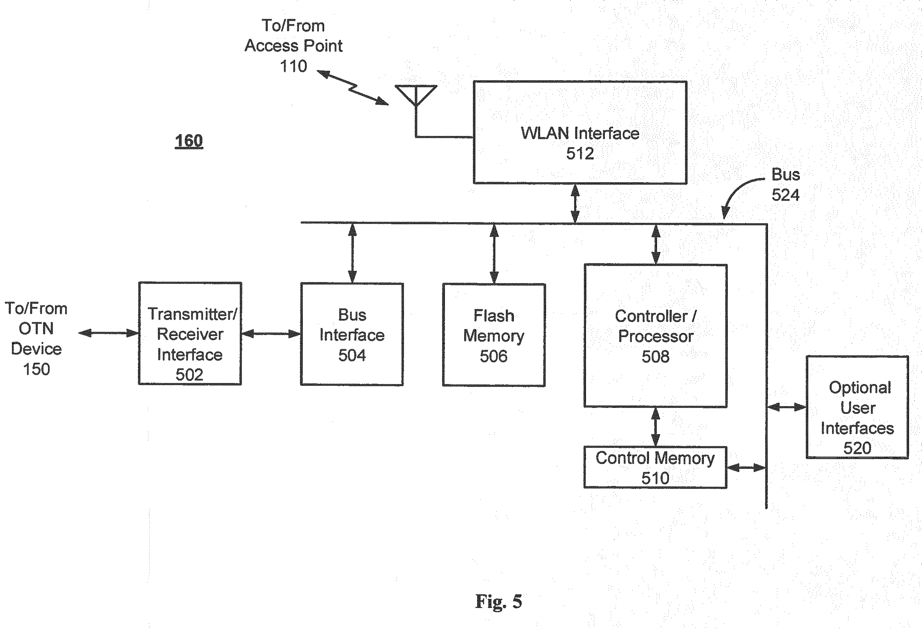

Figure 5 illustrates one embodiment of a wireless adapter, such as WiFi adapter 160, useful to connect a new device, such as remote device 150, to an OTN, such as network 170, to access the wireless resources of an AP, such as wireless network controller 110. In use, wireless adapter 160 is physically and electrically connected to a remote device 150 via some standardized connector to a transmitter/ receiver interface 502. The WiFi adapter may be wirelessly connected to a remote device 150. This interface is operationally used to communicatively connect the adapter 160 to the new device 150. According to an aspect of the invention, the adapter 160 is configured when connected to an AP, such as AP 110. The adapter 160 is then moved to the new device 150 for operational use.

The transmitter/receiver interface 502 is connected to an internal bus interface 504 which allows connection with other elements of the adapter 160 via bus 524. The other elements on bus 524 include flash memory 506, controller/processor 508, control memory 510, user interface 520, and wireless interface 512. As is known in the art, non-bus oriented implementations of adapter 160 are possible and can function similarly to the bus organization shown in Figure 5.

The controller processor 508 allows the adapter 160 to be configured while in the programming mode and to be used while in the operational mode. During configuration, parameters such as on-time network channel, network name, network key, and operational restrictions may be entered by an AP into the adapter 160 via interface 502 via control from processor 508. This action includes the processor acting upon flash memory 506 to store network parameters and use those parameters to set up WLAN interface 512 to accommodate the OTN 170.

Instructions for internal use by the controller/processor 508 may be found in control memory 510. The WLAN interface 512 allows for both the MAC and physical layers of the OTN to operate within the adapter 160. Optional user interface 520 can include, if implemented, a button for initiation of adapter configuration, or a simple LED type of indication of reading and/or writing to the flash memory 506. Another LED type interface on the adapter 160 may be one where the color of the LED changes in response to a positive connection to the OTN.

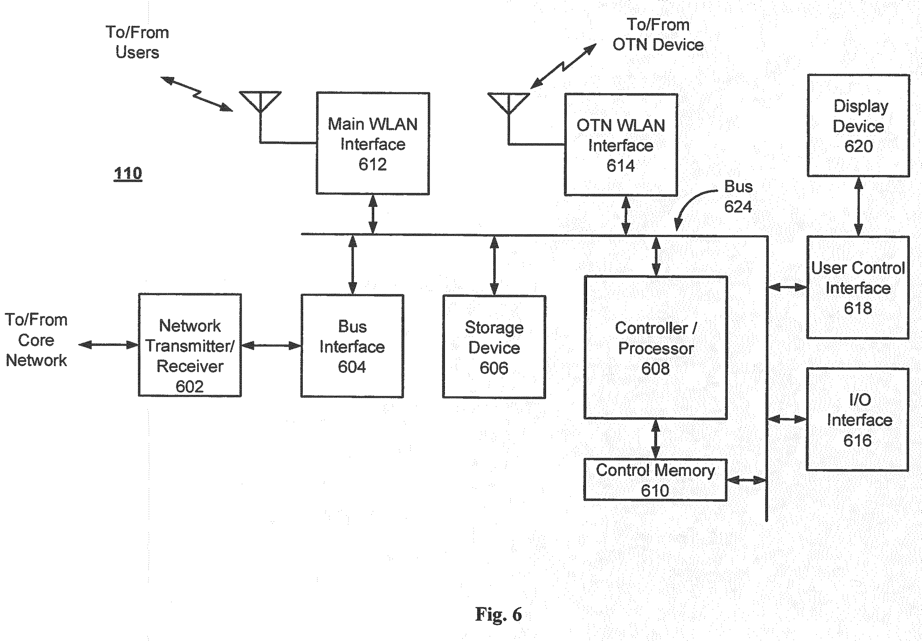

Figure 6 is an example embodiment of an AP, such as that shown in Figure 1, item 110. Here, a connection to the core network is via the network transmitter/receiver interface 602. The core network connection referred to here may include a connection to the internet 180 or other resources 190 which may include servers, remote or cloud memory, or other possible network services. The core network interface 602 connects to the bus interface 604 which allows access to the internal bus 624. Other non-bus implementations are also possible as is well known to those of skill in the art. Present on bus 624 are a storage device 606 which can be used for any general storage such as retrieved or requested data and network management data, parameters, and programs. Such network management and other programs are under the control of controller/processor 608.

This controller/processor 608 may be a single processor or a multiplicity of processors performing the tasks of network management, user interface control, and resource managements. Control memory 610 can supply program instruction and configuration control for controller/processor 608. The user interface 618 allows a user, network owner, or network manager to interact with the AP 110. Such interaction includes the use of a display device 620, keyboards, mouse, light pen, and the like. The user interface 618 allows initialization of a wireless adapter, such as 160 when such wireless adapter is connected to input/output interface 616 as described above herein. User interface control 618 allows an operator of the AP to select or specify creation of an OTN and parameters, such as an SSID and access restrictions, if any.

AP 110 has an optional main wireless network interface 612 which allows access to and from regular users to the resources of the core network. Such an interface includes all elements to control a wireless network, such as main network 120. This capability includes the use of wireless network protocols such as IEEE 802.XX and the like. Main wireless interface 612 may also contain a controller/processor to aid in the management of the main wireless network. Note that the main wireless network 120 of Figure 1 and thus the wireless interface 612 is optional. The AP 110 does not need a main wireless network 120 to practice the features of the invention.

The AP 160 also includes the OTN interface 614. The OTN 170 generated by the interface 614 of the AP 160 allows a wireless adapter 160 to be used to access resources available via the OTN and the AP 110. A user device 150 utilizes a wireless adapter 160 to be compatible with the wireless network generated by the AP 160 via the OTN interface 614. The capability of OTN interface 614 includes the use of wireless network protocols such as IEEE 802.XX, or other standards. Interface 614 may also contain a controller/processor to aid in the management and operation of the OTN 170.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a computer-readable medium such as any of the media listed above or known to those of skill in the art. The instructions thus stored are useful to execute elements of hardware and software to perform the steps of the method described herein.

## Claims

1. A method for generating a one-time network, the method comprising:
receiving (405) a request at an access point for generation of the one-time network;
configuring (410) a wireless network adapter by the access point, wherein the network adapter is configured by the access point to store one-time network key and a one-time network service set identifier;
activation (415) of the one-time network by the access point after the wireless network adapter is configured by the access point, wherein the activation of the one-time network comprises hiding the one-time network service set identifier;
initializing (425) access to the one-time network for a device of the one-time network after the network adapter is installed (420) onto the device; and
providing (435) one-time network access to the device and one-time network interaction (440) on the device.

2. The method of claim 1, wherein the step of receiving a request comprises one of connecting the wireless network adapter to the access point, and selecting a service set identifier of the one-time network.

3. The method of claim 1, wherein the step of receiving a request comprises one of detecting a button activation on either the access point or the wireless network adapter.

4. The method of claim 1, wherein the step of configuring a wireless network adapter comprises writing one or more of a channel for operation of the one-time network, a service set identifier, a network key, and an operational restriction.

5. The method of claim 4, wherein the operational restriction comprises one or more of a limited time to connect the wireless network adapter to the device, a time duration of one-time network access, and a resource access restriction.

6. The method of claim 1, wherein the step of initializing access to the one-time network for a device of the one-time network when the network adapter is installed (420) onto the device comprises initializing access after disconnecting the wireless network adapter from the access point and connecting it to the device.

7. The method of claim 1, wherein the step of providing one-time network access to the device comprises accessing resources available to the access point.

8. An apparatus for generating a one-time network, the apparatus **characterized by**:
an input/output interface (616) for receiving a request for generation of the one-time network;
a processor (608), connected to memory that functions to configure a wireless network adapter connected to the apparatus;
a one-time network interface (614) to communicate with the wireless network adapter when connected to a device, the processor acting to activate the one-time network after configuring the wireless network adapter;
wherein the wireless network adapter is configured by the processor to store the one-time network key and the one-time network service set identifier, and provides access to the one-time network for the device; wherein the processor activates the one-time network after configuring the wireless network adapter and hiding the one-time network service set identifier.

9. The apparatus of claim 8, wherein the input/output interface comprises a connection for the wireless network adapter, the request resulting from connection of the wireless network adapter to the input/output interface.

10. The apparatus of claim 8, wherein the input/output interface comprises an interface for detection of button activation on either the apparatus or the wireless network adapter.

11. The apparatus of claim 8, wherein the processor acts to configure the wireless network adapter by writing one or more of a channel for operation of the one-time network, a service set identifier, a network key, and an operational restriction onto the wireless network adapter.

12. The apparatus of claim 11, wherein the operational restriction is one or more of a limited time to connect the network adapter to the device, a time duration of one-time network access, and a resource access restriction.

13. The apparatus of claim 8, further comprising a user control interface (618) that allows an operator of the apparatus to specify creation of parameters of the one-time network.

14. The apparatus of claim 8, wherein the wireless network adapter is configured by the processor to provide access for the device to resources available to the apparatus via the one-time network.

15. The apparatus of claim 8, wherein the one-time network interface includes a controller/processor to aid in the management and operation of the one-time network.

## Patentansprüche

1. Verfahren zum Erzeugen eines Einmalnetzes, wobei das Verfahren umfasst:
Empfangen (405) einer Anforderung zur Erzeugung des Einmalnetzes bei einem Zugangspunkt;
Konfigurieren (410) eines Adapters für ein drahtloses Netz durch den Zugangspunkt, wobei der Netzadapter durch den Zugangspunkt dafür konfiguriert wird, einen Einmalnetzschlüssel und einen Einmalnetz-Service Set Identifier zu speichern;
Aktivierung (415) des Einmalnetzes durch den Zugangspunkt, nachdem der Adapter für ein drahtloses Netz durch den Zugangspunkt konfiguriert worden ist, wobei die Aktivierung des Einmalnetzes das Verbergen des Einmalnetz-Service Set Identifiers umfasst;
Initialisierung (425) des Zugriffs auf das Einmalnetz für eine Vorrichtung des Einmalnetzes, nachdem der Netzadapter an der Vorrichtung eingebaut worden ist (420); und
Bereitstellen (435) eines Einmalnetzzugriffs auf die Vorrichtung und einer Einmalnetzinteraktion (440) an der Vorrichtung.

2. Verfahren nach Anspruch 1, wobei der Schritt des Empfangens einer Anforderung entweder das Verbinden des Adapters für ein drahtloses Netz mit dem Zugangspunkt oder das Auswählen eines Service Set Identifiers des Einmalnetzes umfasst.

3. Verfahren nach Anspruch 1, wobei der Schritt des Empfangens einer Anforderung das Detektieren einer Knopfaktivierung entweder an dem Zugangspunkt oder an dem Adapter für ein drahtloses Netz umfasst.

4. Verfahren nach Anspruch 1, wobei der Schritt des Konfigurierens eines Adapters für ein drahtloses Netz das Schreiben eines Kanals für den Betrieb des Einmalnetzes und/oder eines Service Set Identifiers und/oder eines Netzschlüssels und/oder einer Betriebsbeschränkung umfasst.

5. Verfahren nach Anspruch 4, wobei die Betriebsbeschränkung eine beschränkte Zeit zum Verbinden des Adapters für ein drahtloses Netz mit der Vorrichtung und/oder eine Zeitdauer des Einmalnetzzugriffs und/oder eine Betriebsmittelzugriffsbeschränkung umfasst.

6. Verfahren nach Anspruch 1, wobei der Schritt des Initialisierens des Zugriffs auf das Einmalnetz für eine Vorrichtung des Einmalnetzes, wenn der Netzadapter an der Vorrichtung eingebaut worden ist (420), das Initialisieren des Zugriffs nach dem Trennen des Adapters für ein drahtloses Netz von dem Zugangspunkt und seinem Verbinden mit der Vorrichtung umfasst.

7. Verfahren nach Anspruch 1, wobei der Schritt des Bereitstellens eines Einmalnetzzugriffs auf die Vorrichtung das Zugreifen auf für den Zugangspunkt verfügbare Betriebsmittel umfasst.

8. Vorrichtung zum Erzeugen eines Einmalnetzes, wobei die Vorrichtung **gekennzeichnet ist durch**:
eine Eingabe/Ausgabe-Schnittstelle (616) zum Empfangen einer Anforderung für die Erzeugung des Einmalnetzes;
einen Prozessor (608), der mit Speicher verbunden ist, der dafür fungiert, einen mit der Vorrichtung verbundenen Adapter für ein drahtloses Netz zu konfigurieren;
eine Einmalnetzschnittstelle (614) zum Kommunizieren mit dem Adapter für ein drahtloses Netz, wenn mit einer Vorrichtung verbunden, wobei der Prozessor dafür wirkt, das Einmalnetz zu aktivieren, nachdem der Adapter für ein drahtloses Netz konfiguriert worden ist;
wobei der Adapter für ein drahtloses Netz **durch** den Prozessor dafür konfiguriert wird, den Einmalnetzschlüssel und den Einmalnetz-Service Set Identifier zu speichern, und für die Vorrichtung Zugriff auf das Einmalnetz bereitstellt; wobei der Prozessor das Einmalnetz nach Konfigurieren des Adapters für ein drahtloses Netz und Verbergen des Einmalnetz-Service Set Identifiers aktiviert.

9. Vorrichtung nach Anspruch 8, wobei die Eingabe/Ausgabe-Schnittstelle eine Verbindung für den Adapter für ein drahtloses Netz umfasst, wobei sich die Anforderung aus der Verbindung des Adapters für ein drahtloses Netz mit der Eingabe/Ausgabe-Schnittstelle ergibt.

10. Vorrichtung nach Anspruch 8, wobei die Eingabe/Ausgabe-Schnittstelle eine Schnittstelle zur Detektion einer Knopfaktivierung entweder an der Vorrichtung oder an dem Adapter für ein drahtloses Netz umfasst.

11. Vorrichtung nach Anspruch 8, wobei der Prozessor dafür wirkt, den Adapter für ein drahtloses Netz durch Schreiben eines Kanals für den Betrieb des Einmalnetzes und/oder eines Service Set Identifiers und/oder eines Netzschlüssels und/oder einer Betriebsbeschränkung an den Adapter für ein drahtloses Netz zu konfigurieren.

12. Vorrichtung nach Anspruch 11, wobei die Betriebsbeschränkung eine beschränkte Zeit zum Verbinden des Netzadapters mit der Vorrichtung und/oder eine Zeitdauer des Einmalnetzzugriffs und/oder eine Betriebsmittelzugriffsbeschränkung ist.

13. Vorrichtung nach Anspruch 8, die ferner eine Nutzersteuerungsschnittstelle (618) umfasst, die ermöglicht, dass ein Betreiber der Vorrichtung die Erzeugung von Parametern des Einmalnetzes spezifiziert.

14. Vorrichtung nach Anspruch 8, wobei der Adapter für ein drahtloses Netz durch den Prozessor dafür konfiguriert wird, für die Vorrichtung Zugriff auf Betriebsmittel, die für die Vorrichtung über das Einmalnetz verfügbar sind, bereitzustellen.

15. Vorrichtung nach Anspruch 8, wobei die Einmalnetzschnittstelle einen Controller/Prozessor zur Hilfe beim Management und Betrieb des Einmalnetzes enthält.

## Revendications

1. Procédé pour générer un réseau à usage unique, le procédé comprenant :
la réception (405) d'une demande au niveau d'un point d'accès pour la génération du réseau à usage unique ;
la configuration (410) d'une carte réseau sans fil par le point d'accès, où la carte réseau est configurée par le point d'accès pour stocker une clé réseau à usage unique et un identifiant d'ensemble de services réseau à usage unique ;
l'activation (415) du réseau à usage unique par le point d'accès une fois que la carte réseau sans fil a été configurée par le point d'accès, où l'activation du réseau à usage unique comprend le masquage de l'identifiant d'ensemble de services réseau à usage unique ;
l'initialisation (425) de l'accès au réseau à usage unique pour un dispositif du réseau à usage unique une fois que la carte réseau a été installée (420) sur le dispositif ; et la fourniture (435) d'un accès au réseau à usage unique au dispositif et d'une interaction avec le réseau à usage unique (440) sur le dispositif.

2. Procédé selon la revendication 1, dans lequel l'étape de réception d'une demande comprend un élément parmi la connexion de la carte réseau sans fil au point d'accès et la sélection d'un identifiant d'ensemble de services réseau à usage unique.

3. Procédé selon la revendication 1, dans lequel l'étape de réception d'une demande comprend un élément parmi la détection de l'activation d'un bouton sur le point d'accès ou la carte réseau sans fil.

4. Procédé selon la revendication 1, dans lequel l'étape de configuration d'une carte réseau sans fil comprend l'écriture d'un ou de plusieurs éléments parmi un canal pour l'utilisation du réseau à usage unique, un identifiant d'ensemble de services, une clé réseau et une restriction opérationnelle.

5. Procédé selon la revendication 4, dans lequel la restriction opérationnelle comprend un ou plusieurs éléments parmi un délai limité pour connecter la carte réseau sans fil au dispositif, une durée d'accès au réseau à usage unique et une restriction d'accès aux ressources.

6. Procédé selon la revendication 1, dans lequel l'étape d'initialisation de l'accès au réseau à usage unique pour un dispositif du réseau à usage unique lorsque la carte réseau est installée (420) sur le dispositif comprend l'initialisation de l'accès après la déconnexion de la carte réseau sans fil du point d'accès et sa connexion au dispositif.

7. Procédé selon la revendication 1, dans lequel l'étape de fourniture d'un accès au réseau à usage unique au dispositif comprend l'accès aux ressources accessibles au point d'accès.

8. Appareil pour générer un réseau à usage unique, l'appareil étant **caractérisé par** :
une interface d'entrée/de sortie (616) pour recevoir une demande pour la génération du réseau à usage unique ;
un processeur (608) connecté à la mémoire qui configure une carte réseau sans fil connectée à l'appareil ;
une interface réseau à usage unique (614) pour communiquer avec la carte réseau sans fil lorsqu'elle est connectée à un dispositif, le processeur agissant pour activer le réseau à usage unique après la configuration de la carte réseau sans fil ;
dans lequel la carte réseau sans fil est configurée par le processeur pour stocker la clé réseau à usage unique et l'identifiant d'ensemble de services réseau à usage unique, et fournit l'accès au réseau à usage unique pour le dispositif ; dans lequel le processeur active le réseau à usage unique après la configuration de la carte réseau sans fil et le masquage de l'identifiant d'ensemble de services réseau à usage unique.

9. Appareil selon la revendication 8, dans lequel l'interface d'entrée/de sortie comprend une connexion pour la carte réseau sans fil, la demande résultant de la connexion de la carte réseau sans fil à l'interface d'entrée/de sortie.

10. Appareil selon la revendication 8, dans lequel l'interface d'entrée/de sortie comprend une interface pour la détection de l'activation d'un bouton sur l'appareil ou la carte réseau sans fil.

11. Appareil selon la revendication 8, dans lequel le processeur configure la carte réseau sans fil en écrivant un ou plusieurs éléments parmi un canal pour l'utilisation du réseau à usage unique, un identifiant d'ensemble de services, une clé réseau et une restriction opérationnelle sur la carte réseau sans fil.

12. Appareil selon la revendication 11, dans lequel la restriction opérationnelle correspond à un ou plusieurs éléments parmi un délai limité pour connecter la carte réseau au dispositif, une durée d'accès au réseau à usage unique et une restriction d'accès aux ressources.

13. Appareil selon la revendication 8, comprenant en outre une interface de commande utilisateur (618) qui permet à un opérateur de l'appareil de spécifier la création de paramètres du réseau à usage unique.

14. Appareil selon la revendication 8, dans lequel la carte réseau sans fil est configurée par le processeur pour fournir au dispositif l'accès aux ressources accessibles à l'appareil via le réseau à usage unique.

15. Appareil selon la revendication 8, dans lequel l'interface réseau à usage unique inclut un contrôleur/processeur pour faciliter la gestion et l'utilisation du réseau à usage unique.
